# EUROPEAN PATENT APPLICATION

(11) **EP 4 524 107 A1**
(43) Date of publication of application: **19.03.2025**
(21) Application number: 23818755.3
(22) Date of filing: 23.02.2023
(51) Int. Cl.: C01G 53/00, H01M 4/505, H01M 4/525

(54) **BORON ELEMENT DOPED HIGH-NICKEL TERNARY PRECURSOR MATERIAL, PREPARATION METHOD THEREFOR, AND HIGH-NICKEL TERNARY POSITIVE ELECTRODE MATERIAL**

(30) Priority: 10.06.2022 CN 202210651790
(71) Applicant: Ningbo Ronbay New Energy Technology Co., Ltd., Yuyao Ningbo, Zhejiang 315402 (CN)
(72) Inventor: YU, Chunlin, Ningbo, Zhejiang 315402 (CN); CHEN, Xudong, Ningbo, Zhejiang 315402 (CN); MIYAGAWA, Toshio, Ningbo, Zhejiang 315402 (CN); SUN, Hui, Ningbo, Zhejiang 315402 (CN)
(74) Representative: Bandpay & Greuter
(86) International application number: PCT/CN2023/077789
(87) International publication number: WO 2023/236587

(57) **Abstract**

The present application provides a high-nickel ternary precursor material, with a molecular formula shown in formula (I): NiₐCo_{b}Mn_{c}(OH)₂•(BO₂)_{d} (I); where 0.8≤a<1, 0<b≤ 0.15, 0<c≤0.05, a+b+c=1, and 0<d≤0.05; the high-nickel ternary precursor material has an inner core having a densely stacked structure and an outer shell having a dendritic radial loose structure, and both the inner core and the outer shell of the high-nickel ternary precursor are evenly doped with B element. The present invention can ensure the uniformity of a doping element by adding the doping element during the preparation process of the precursor material. The above precursor material of the present invention has good high-temperature stability and can be used to obtain a fully radial positive electrode material with excellent performance by controlling the high-temperature sintering.

## Description

This application claims priority to the Chinese patent application No. 202210651790.4 filed with the China National Intellectual Property Administration on June 10, 2022, entitled "Boron Element-Doped High-Nickel Ternary Precursor Material, Preparation Method Thereof and High-Nickel Ternary Positive Electrode Material", the entire contents of which are incorporated herein by reference.

### TECHNICAL FIELD

The present invention relates to the technical field of lithium-ion batteries, and in particular to a boron element-doped high-nickel ternary precursor material, a preparation method thereof, and a high-nickel ternary positive electrode material.

### BACKGROUND

As gradual expanding of the new energy vehicle market, the market demand for high-energy-density ternary positive electrode materials is increasing. Generally, a most convenient way to increase the energy density of a battery is to increase nickel content of the ternary positive electrode material. However, the increase in the nickel content will bring many problems such as poor cycle performance, a very important reason for which is that primary particles within the ternary positive electrode material are disorderly arranged, and lithium ions can migrate only along {010} crystal plane. The primary particles arranged disorderly leads to that the internal lithium ions have a relatively long migration path, which affects a rate of lithium deintercalation/intercalation process and ultimately leads to serious side reaction, affecting the cycle performance of the material.

Constructing an anode material with a radial structure is considered to be a more effective way to solve this problem. The primary particles inside the positive electrode material grow radially, which can firstly sufficiently promote effective transmission of lithium ions; secondly, the primary particles inside thereof are arranged in an orderly and directional manner, which can better promote the effective acceptance and release of internal stress. Therefore, the material with this structure is considered to have high capacity and good cycle performance.

In fact, it is not easy to obtain a positive electrode material with this structure and the prior art does not disclose a method by which it can be stably prepared. The reason for this is that the preparation of the positive electrode material with a radial structure requires a precursor with a special structure and also a special process. Since a positive electrode material has good inheritance to the precursor material, a positive electrode material with excellent performance must be based on a precursor with excellent performance, but a precursor with excellent performance is not necessarily able to prepare a positive electrode material with excellent performance.

Therefore, at present, research in the precursor-positive electrode material industry is focused on preparation of a radial positive electrode material by preparing a precursor with a special structure and then matching it with a special process. In the interior of the positive electrode material obtained by sintering the precursor material prepared by an existing method, the primary particles generally have a disordered arrangement structure, or only part thereof presents a radial stacked structure. Compared with a positive electrode material with a full radial structure, the positive electrode material with the primary particles stacked disorderly has a long migration path of lithium ions, resulting in a slow migration rate of the lithium ions, which is manifested in low capacity and poor cycle performance.

### SUMMARY

The technical problem to be solved by the present invention is to provide a preparation method of a high-nickel ternary precursor material. The primary particles of the positive electrode material prepared by the precursor material which is prepared by this preparation method are completely radially arranged, and needs to be sintered only once to achieve excellent specific capacity and cycle performance.

The present invention provides a high-nickel ternary precursor material with a molecular formula shown in formula (I):

NiₐCo_{b}Mn_{c}(OH)₂•(BO₂)_{d} (I);

where 0.8≤a<1, 0<b≤0.15, 0<c≤0.05, a+b+c=1, and 0<d≤0.05;
the high-nickel ternary precursor material has an inner core having a densely stacked structure and an outer shell having a dendritic radial loose structure, and both the inner core and the outer shell of the high-nickel ternary precursor are evenly doped with B element.

Preferably, the dendritic radial loose structure has a depth of 1.5-2 µm.

The present invention provides a preparation method of a high-nickel ternary precursor material, including the following steps:
A) preparing a mixed solution of nickel, cobalt and manganese soluble salts according to a ratio, and preparing an alkali solution, a complexant solution, a surfactant solution and a boron additive solution, respectively;
B) mixing water, the alkali solution, the surfactant solution, the boron additive solution, the mixed solution of the soluble salts and the complexant solution, controlling an ammonia concentration and a feed flow rate of the surfactant solution for reaction, so that internal grains are densely stacked; when the grains reach 2-2.5 µm, reducing the ammonia concentration and increasing the feed flow rate of the surfactant solution for continuous reaction, so that external grains show the dendritic radial loose structure; and
C) aging a reactant obtained in step B) to obtain the high-nickel ternary precursor material as shown in formula (I):

   NiₐCo_{b}Mn_{c}(OH)₂•(BO₂)_{d} (I);

   where 0.8≤a<1, 0<b≤0.15, 0<c≤0.05, and a+b+c =1; and 0<d≤0.05.

Preferably, the mixed solution of the soluble salts has a total concentration of metal ions of 1-2 mol/L; the alkali solution has a concentration of 2-10 mol/L; complexant is selected from one or more of ammonium bicarbonate, glycine, ammonia and triethanolamine, and the complexant solution has a concentration of 3-10 mol/L; surfactant is polyethylene glycol, and the surfactant solution has a concentration of 0.01-0.2 mol/L; boron additive is selected from one or more of diboron trioxide, boron trichloride, boron trifluoride, boric acid and sodium metaborate, and the boron additive solution has a concentration of 0.05-0.1 mol/L.

Preferably, step B) is specifically:
adding 75-85% effective volume of water into a reaction kettle, adding the alkali solution and the complexant solution under stirring to obtain an initial mixed solution, where the initial mixed solution has a pH value of 11.5-12.5 and an ammonia concentration of 10-13 g/L;
introducing a protective gas into the reaction kettle, and then introducing the mixed solution of the soluble salts, the alkali solution, the complexant solution, the surfactant solution and the boron additive solution continuously to obtain a mixed solution which is subjected to a constant-temperature reaction; where the mixed solution has an ammonia concentration of 10-13 g/L, and the surfactant solution has a feed flow rate of 1-10 mL/min, so that the grains are densely stacked; when size of the grains reaches 2-2.5 µm, the surfactant solution has a feed flow rate of 10-20 mL/min and the mixed solution has an ammonia concentration of 3-4 g/L, the constant-temperature reaction is continued so that an exterior of the grains shows a dendritic radial loose structure.

Preferably, the protective gas has a flow rate of 0.1-0.5 m³/h, and oxygen content inside the kettle is less than 2%.

Preferably, when the grains are densely stacked, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 5-10 mL/min; the boron additive solution has a feed temperature of 20-30 °C and a feed flow rate of 3-10 mL/min; and stirring rate is 400-500 rpm.

Preferably, when the grains grow radially in dendritic form, that is, when the dendritic radial loose structure is formed, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 1-5mL/min; the boron additive solution has a feed temperature of 20-30 °C and a feed flow rate of 3-10 mL/min; and stirring rate is 200-300 rpm.

The present invention provides a high-nickel ternary positive electrode material with a molecular formula shown in formula (II):

LiₓNiₐCo_{b}Mn_{c}B_{d}O₂ (II);

where 1.02≤x≤1.03, 0.8≤a<1, 0<b≤0.15, 0<c≤0.05, a+b+c=1, and 0<d≤ 0.05;
all primary particles inside the high-nickel ternary positive electrode material have a slender structure and are arranged in a fully radial manner, and the particles are tightly stacked with each other.

Preferably, the primary particles arranged in the fully radial manner have a length of 3-4 µm and a width of 150-250 nm.

The present invention provides a preparation method of the high-nickel ternary positive electrode material according to any one of the above technical solutions, including: sintering a high-nickel ternary precursor material and a lithium source to obtain the high-nickel ternary positive electrode material.

The high-nickel ternary precursor material is the high-nickel ternary precursor material according to any one of the above technical solutions or the high-nickel ternary precursor material prepared by the preparation method according to any one of the above technical solutions.

Preferably, the sintering is a two-stage sintering, including a first stage sintering at 400-600°C, and a second stage sintering at 700-800°C; the sintering has a heating rate of 2-5°C/min.

Compared with the prior art, the present application provides a high-nickel ternary precursor material with a molecular formula shown in formula (I): NiₐCo_{b}Mn_{c}(OH)₂•(BO₂)_{d} (I); where 0.8≤a<1, 0<b≤0.15, 0<c≤0.05, and a+b+c=1; 0<d≤0.05; the inner core of the high-nickel ternary precursor material is a densely stacked structure, the outer shell thereof is a dendritic radial loose structure, and both the inner core and the outer shell of the high-nickel ternary precursor material are evenly doped with the B element. The present invention can ensure the uniformity of a doping element by adding the doping element during the preparation process of the precursor material. The precursor material of the present invention has good high-temperature stability and a fully radial positive electrode material with excellent performance can be obtained by controlling the high-temperature sintering.

### BRIEF DESCRIPTION OF DRAWINGS

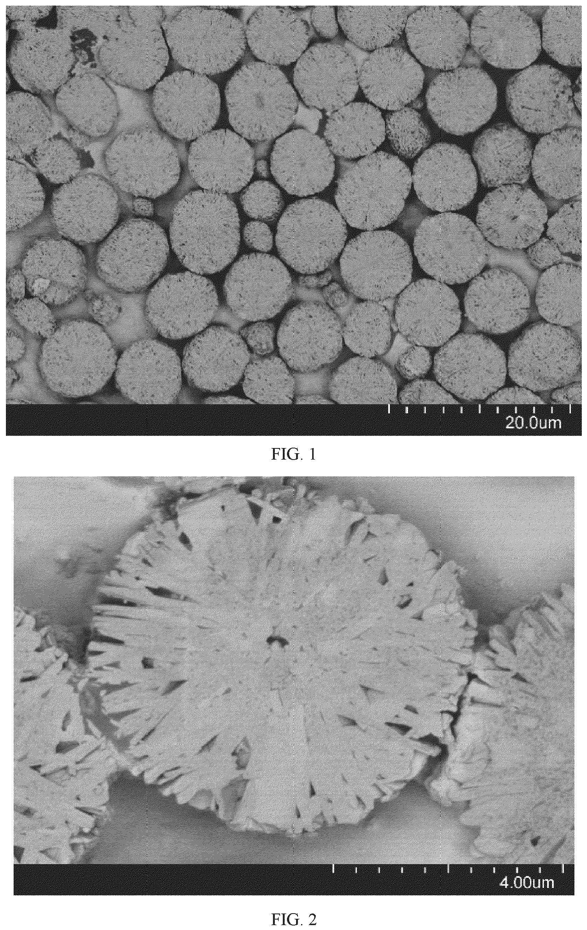

FIG. 1 is a cross-sectional SEM image of a precursor prepared in Example 1 of the present invention.
FIG. 2 is a cross-sectional SEM image of a positive electrode material sintered from the precursor prepared in Example 1 of the present invention.

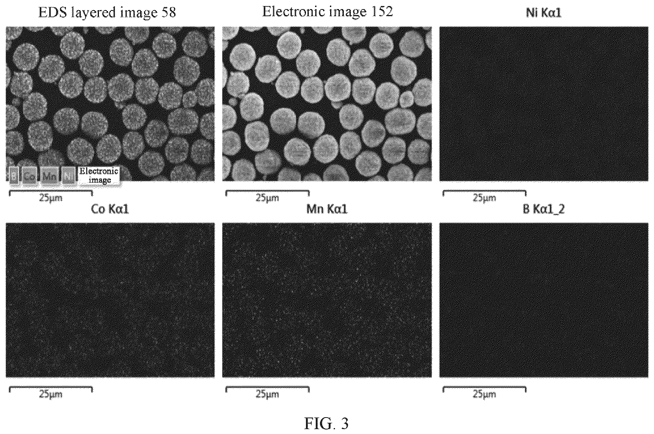

FIG. 3 is an EDS spectrum of the precursor prepared in Example 1 of the present invention.

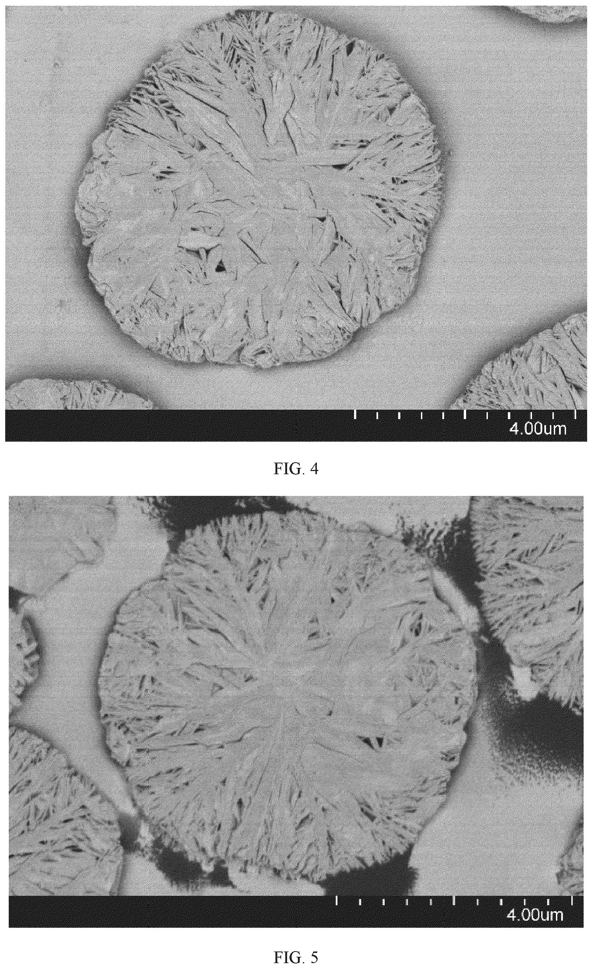

FIG. 4 is a cross-sectional SEM image of a precursor prepared in Example 2 of the present invention.
FIG. 5 is a cross-sectional SEM image of a precursor prepared in Example 3 of the present invention.

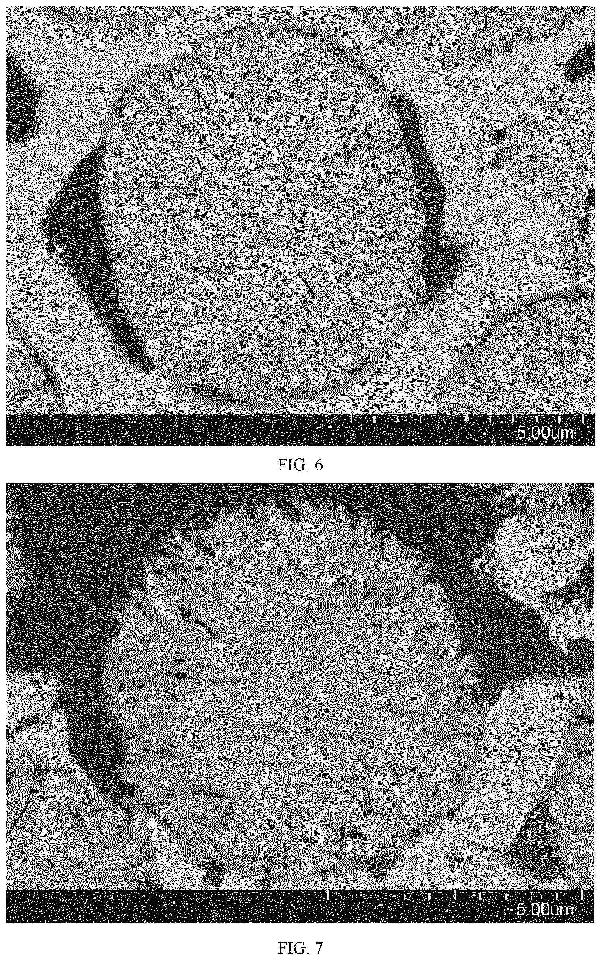

FIG. 6 is a cross-sectional SEM image of a precursor prepared in Example 4 of the present invention.
FIG. 7 is a cross-sectional SEM image of a precursor prepared in Comparative Example 1 of the present invention.

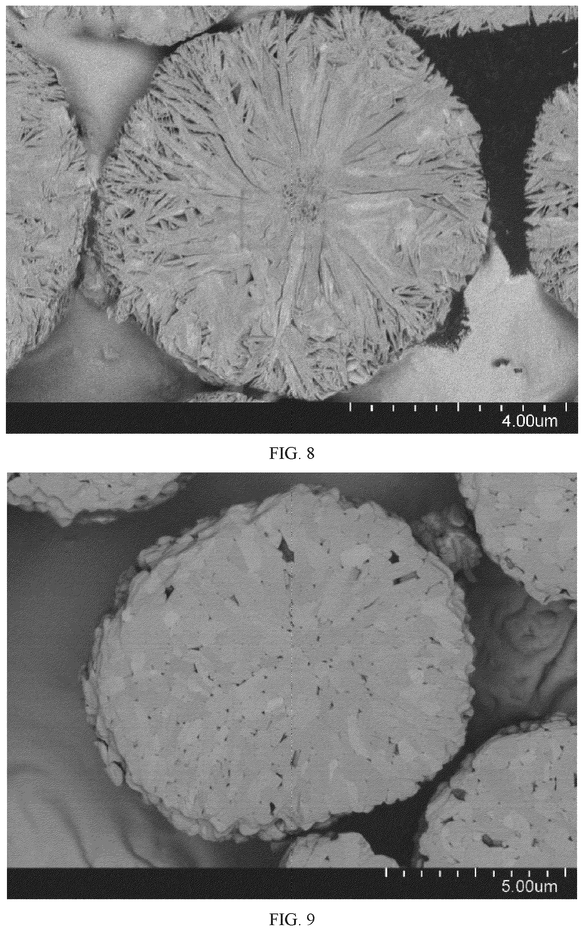

FIG. 8 is a cross-sectional SEM image of a precursor prepared in Comparative Example 2 of the present invention.
FIG. 9 is a cross-sectional SEM image of a positive electrode material sintered from the precursor prepared in Comparative Example 2 of the present invention.

### DESCRIPTION OF EMBODIMENTS

In order to further understand the present invention, preferred embodiments of the present invention are described herein in conjunction with examples. However, it should be understood that these descriptions are only for further illustrating the features and advantages of the present invention, rather than limiting the claims of the present invention.

The present invention can ensure the uniformity of a doping element by adding the doping element during the preparation process of the precursor. Meanwhile, a precursor material that combines element doping and special morphology is achieved by a precursor having a dense inner core in combination with an outer shell with a dendritic structure, into which doping element B is introduced.

The present invention innovatively obtain a positive electrode material with primary particles arranged fully radially by utilizing characteristic of high bond energy of B-O bond and special effect of B element on the morphology of positive electrode material, and the obtained positive electrode material shows excellent performance. And it only needs to be sintered once to achieve excellent performance.

The present invention provides a high-nickel ternary precursor material with a molecular formula shown in formula (I):

NiₐCo_{b}Mn_{c}(OH)₂•(BO₂)_{d} (I);

where 0.8≤a<1, 0<b≤0.15, 0<c≤0.05, a+b+c=1, and 0<d≤0.05;
the high-nickel ternary precursor material has an inner core with a densely stacked structure and an outer shell with a dendritic radial loose structure, and the high-nickel ternary precursor material has uniform doping of B element.

Preferably, 0.8≤a<0.9, 0<b≤0.14, 0<c≤0.04, a+b+c=1, and 0<d≤0.04.

The high-nickel ternary precursor material of the present invention has an interior in dense structure and in radial structure. The exterior is distributed in void structure that is less dense than the interior, and is similar to dendrites.

By observing SEM image of the high-nickel ternary precursor material, it can be known that the outer shell has a void structure, and the dendritic radial loose structure has a depth of 1.5-2 µm in the present invention.

The present invention provides a preparation method of a high-nickel ternary precursor material, including the following steps:
A) preparing a mixed solution of nickel, cobalt and manganese soluble salts according to a ratio, and preparing an alkali solution, a complexant solution, a surfactant solution and a boron additive solution, respectively;
B) mixing water, the alkali solution, the surfactant solution, the boron additive solution, the mixed solution of the soluble salts and the complexant solution, controlling an ammonia concentration and a feed flow rate of the surfactant solution for reaction, so that internal grains are densely stacked; when the grains reach 2-2.5 µm, reducing the ammonia concentration and increasing the feed flow rate of the surfactant solution for continuous reaction, so that external grains show a dendritic radial loose structure;
C) aging a reactant obtained in step B) to obtain the high-nickel ternary precursor material as shown in formula (I):

   NiₐCo_{b}Mn_{c}(OH)₂•(BO₂)_{d} (I);

   where 0.8≤a<1, 0<b≤0.15, 0<c≤0.05, and a+b+c =1; and 0<d≤0.05.

According to the present invention, during the preparation process of the high-nickel ternary precursor material, firstly, a mixed solution of nickel, cobalt and manganese soluble salts is prepared according to a ratio of metal elements, and also a alkali solution, a complexant solution, a surfactant solution and a boron additive solution are separately prepared in the present application.

In the present application, the soluble mixed salt of nickel, cobalt and manganese is selected from one or more of carbonate, nitrate, sulfate and acetate of nickel, cobalt and manganese; the mixed solution of the soluble salts has a total concentration of metal ions of 1-2 mol/L; where metal ions Ni:Co:Mn have a molar ratio of (83-92):(3-12):05; in some specific embodiments, the metal ions Ni:Co:Mn have a molar ratio of 92:03:05; in some specific embodiments, the molar ratio of the metal ions Ni:Co:Mn can be selected as 83:12:05; the alkali is selected from one or two of NaOH and KOH, and the alkali solution has a molar concentration of 2-10 mol/L; the complexant is selected from one or more of ammonium bicarbonate, glycine, ammonia and triethanolamine, and the complexant solution has a molar concentration of 3-10 mol/L; the surfactant is polyethylene glycol, and the surfactant solution has a molar concentration of preferably 0.01-0.2 mol/L and more preferably 0.05-0.2 mol/L; the boron additive is selected from one or more of diboron trioxide, boron trichloride, boron trifluoride, boric acid and sodium metaborate, and the boron additive solution has a concentration of preferably 0.05-0.1 mol/L and more preferably 0.07-0.1 mol/L.

In a specific embodiment, the alkali solution has a concentration of 4-8 mol/L, and the complexant solution has a concentration of 5-10 mol/L.

In the present application, secondly the water, the alkali solution, the surfactant solution, the boron additive solution, the mixed solution of the soluble salts and the complexant solution are mixed, the ammonia concentration and the feed flow rate of the surfactant solution are controlled for reaction; when the grains are stacked densely and grow to 2-2.5 µm, the ammonia concentration is reduced and the feed flow rate of the surfactant solution is increased for continuous reaction, so that the grains grow radially in dendritic form to show the dendritic radial loose structure.

More specifically, the above process is as follows:
adding 75-85% effective volume of water into a reaction kettle, adding the alkali solution and the complexant solution under stirring to obtain an initial mixed solution, where the initial mixed solution has a pH value of 11.5-12.5 and an ammonia concentration of 10-13 g/L;
introducing a protective gas into the reaction kettle, and then introducing the mixed solution of the soluble salts, the alkali solution, the complexant solution, the boron additive solution and the surfactant solution continuously to obtain a mixed solution which is subjected to a constant-temperature reaction, where the mixed solution has an ammonia concentration of 10-13 g/L, and the surfactant solution has a feed flow rate of 1-10 mL/min, so that the grains grow in a densely stacked manner; when size of the grains reaches 2-2.5 µm, the surfactant solution has a feed flow rate of 10-20 mL/min and the ammonia concentration is 3-4 g/L, and the constant-temperature reaction is continued so that the grains grow radially in dendritic form.

In the above process, the constant-temperature reaction has a temperature of 30-60°C, the protective gas has a flow rate of 0.1-0.5 m³/h, and an oxygen content in the kettle is less than 2%; and the protective gas is selected from one or two of nitrogen and argon.

When the grains grow in a densely stacked manner, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 5-10 mL/min; the boron additive solution has a feed temperature of 20-30 °C and a feed flow rate of 3-10 mL/min; and stirring rate is 400-500 rpm.

When the grains grow radially in dendritic form, that is, when the dendritic radial loose structure is formed, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 1-5 mL/min; the boron additive solution has a feed temperature of 20-30 °C and a feed flow rate of 3-10 mL/min; and the stirring has a stirring rate of 200-300 rpm.

In the present application, when the above raw materials are added and the reaction starts, the feed flow rate, ammonia concentration and stirring rate are controlled so that the grains grow in a densely stacked manner; and after the grains grow to a certain size, the feed flow rate, ammonia concentration and stirring rate are changed so that the grains grow radially in dendritic form.

Finally, the reactant obtained above is aged to obtain the high-nickel ternary precursor material in the present application. The aging time is 40-50 h; preferably, the aging is carried out in an aging kettle.

Preferably, the above is specifically as follows: stirring the reactant under a nitrogen protection condition, centrifuging and washing to obtain a dried material; drying the dried material in a blast drying oven, and sieving to obtain the high-nickel ternary precursor material.

Preferably, the washing is specifically as follows: centrifugal washing at 55°C for 30 min using 3 mol/L of NaOH solution as washing liquid, and then centrifugal washing with deionized water at 55°C for 30 min.

Preferably, the drying is specifically as follows: placing the material to be dried in a blast drying oven, drying at a drying temperature of 120° C for 15 h; sieving the dried material through a 325-mesh sieve, and removing iron.

The high-nickel ternary positive electrode material obtained from the above high-nickel ternary precursor material can inherit the morphology of the high-nickel ternary precursor material. Specifically, the present invention provides a high-nickel ternary positive electrode material with a molecular formula shown in formula (II):

LiₓNiₐCo_{b}Mn_{c}B_{d}O₂ (II);

where 1.02≤x≤1.03, 0.8≤a<1, 0<b≤0.15, 0<c≤0.05, a+b+c=1, and 0<d≤ 0.05;
all primary particles inside the high-nickel ternary positive electrode material have a slender structure and are arranged in a fully radial manner, and the particles are tightly stacked with each other.

More specifically, the primary particles arranged in the fully radial manner have a length of 3-4 µm and a width of 150-250 nm.

The present application further provides a preparation method of the above high-nickel ternary positive electrode material. Specifically, a preparation method of a high-nickel ternary positive electrode material includes the following steps:
sintering a high-nickel ternary precursor material and a lithium source to obtain the high-nickel ternary positive electrode material as shown in a formula (II):

   LiₓNiₐCo_{b}Mn_{c}B_{d}O₂ (II);
where 1.02≤x≤1.03, 0.8≤a<1, 0<b≤0.15, 0<c≤0.05, a+b+c=1, and 0<d≤ 0.05.

The high-nickel ternary precursor material is the high-nickel ternary precursor material described in the above technical solutions.

In the above preparation method, the sintering is specifically a two-stage sintering: a first stage sintering which has a temperature of 400-600°C, and a second stage sintering which has a temperature of 700-800°C. The lithium source is selected from lithium hydroxide in the present application. The first stage sintering is to ensure that lithium salt after melting can enter interior of the precursor; and the second stage sintering is to ensure a stable formation of an oxide crystal form. The sintering has a heating rate of 2-5 °C/min. The temperature during the heating process should not be increased too fast. If the temperature is increased too fast, it is easy to cause the lithium salt to be unable to fully enter the precursor to participate in the reaction; and if the temperature is increased too slow, it is not conducive to the industrial production process.

In order to further understand the present invention, the high-nickel ternary precursor material and the preparation method thereof provided by the present invention are described in detail below in conjunction with the examples. The protection scope of the present invention is not limited by the following examples.

### Example 1

(1) An aqueous solution A with a total ion concentration of 1.5 mol/L was prepared using cobalt sulfate, nickel sulfate and manganese sulfate, where the molar ratio of metal ions Ni:Co:Mn is 83:12:05.
(2) A 5 mol/L of alkali solution B was prepared using sodium hydroxide; a 9 mol/L of complexant solution C was prepared using ammonia and deionized water; a 0.2 mol/L of polyethylene glycol solution D was prepared using polyethylene glycol and deionized water; an additive solution E with a concentration of 0.1 mol/L was prepared using diboron trioxide.
(3) 80 L of deionized water was introduced into a 100 L of clean reaction kettle, the liquids in the reaction kettle were maintained at a temperature of 55 °C by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C, D and E were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 mL/min respectively, to control the pH in the reaction kettle to be 11.5 and the ammonia concentration to be 12 g/L; the surfactant solution D has a feed temperature of 25 °C and a feed flow rate controlled to be 5 mL/min in an early stage; the additive solution E has a feed temperature of 25 °C and a feed flow rate of 3.75 mL/min. After the particle size of the internal structure densely stacked reached 2-2.5 µm, the feed flow rate of the surfactant solution D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200rpm. Under this condition, the particles grew continually until the particle size thereof was qualified, and the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a two-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

### Example 2

(1) An aqueous solution A with a total ion concentration of 1.5 mol/L was prepared using cobalt sulfate, nickel sulfate and manganese sulfate, where the molar ratio of metal ions Ni:Co:Mn is 92:03:05.
(2) A 5 mol/L of alkali solution B was prepared using sodium hydroxide; a 9 mol/L of complexant solution C was prepared using ammonia and deionized water; a 0.2 mol/L of polyethylene glycol solution D was prepared using polyethylene glycol and deionized water; an additive solution E with a concentration of 0.1 mol/L was prepared using diboron trioxide.
(3) 80 L of deionized water was introduced into a 100 L of clean reaction kettle, the liquids in the reaction kettle were maintained at a temperature of 55 °C by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C, D and E were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 mL/min respectively, to control the pH in the reaction kettle to be 11.5 and the ammonia concentration to be 12 g/L; the surfactant solution D has a feed temperature of 25 °C and a feed flow rate controlled to be 5 mL/min in an early stage; the additive solution E has a feed temperature of 25 °C and a feed flow rate of 3.75 mL/min. After the particle size of the internal structure densely stacked reached 2-2.5 µm, the feed flow rate of the surfactant solution D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200rpm. Under this condition, the particles grew continually until the particle size thereof was qualified, and the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a two-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

### Example 3

(1) An aqueous solution A with a total ion concentration of 1.5 mol/L was prepared using cobalt sulfate, nickel sulfate and manganese sulfate, where the molar ratio of metal ions Ni:Co:Mn is 83:12:05.
(2) A 5 mol/L of alkali solution B was prepared using sodium hydroxide; a 9 mol/L of complexant solution C was prepared using ammonia and deionized water; a 0.2 mol/L of polyethylene glycol solution D was prepared using polyethylene glycol and deionized water; and an additive solution E with a concentration of 0.1 mol/L was prepared using boric acid.
(3) 80 L of deionized water was introduced into a 100 L of clean reaction kettle, the liquids in the reaction kettle were maintained at a temperature of 55 °C by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C, D and E were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 mL/min respectively, to control the pH in the reaction kettle to be 11.5 and the ammonia concentration to be 12 g/L; the surfactant solution D has a feed temperature of 25 °C and a feed flow rate controlled to be 5 mL/min in an early stage; the additive solution E has a feed temperature of 25 °C and a feed flow rate of 7.5 mL/min. After the particle size of the internal structure densely stacked reached 2-2.5 µm, the feed flow rate of the surfactant solution D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200rpm. Under this condition, the particles grew continually until the particle size thereof was qualified, and the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a two-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

### Example 4

(1) An aqueous solution A with a total ion concentration of 1.5 mol/L was prepared using cobalt sulfate, nickel sulfate and manganese sulfate, where the molar ratio of metal ions Ni:Co:Mn is 83:12:05.
(2) A 5 mol/L of alkali solution B was prepared using sodium hydroxide; a 9 mol/L of complexant solution C was prepared using ammonia and deionized water; a 0.2 mol/L of polyethylene glycol solution D was prepared using polyethylene glycol and deionized water; an additive solution E with a concentration of 0.1 mol/L was prepared using sodium metaborate.
(3) 80 L of deionized water was introduced into a 100 L of clean reaction kettle, the liquids in the reaction kettle were maintained at a temperature of 55 °C by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C, D and E were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 mL/min respectively, to control the pH in the reaction kettle to be 11.5 and the ammonia concentration to be 12 g/L; the surfactant solution D has a feed temperature of 25 °C and a feed flow rate controlled to be 5 mL/min in an early stage; the additive solution E has a feed temperature of 25 °C and a feed flow rate of 7.5 mL/min. After the particle size of the internal structure densely stacked reached 2-2.5 µm, the feed flow rate of the surfactant solution D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200rpm. Under this condition, the particles grew continually until the particle size thereof was qualified, and the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a three-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

### Comparative Example 1

(1) An aqueous solution A with a total ion concentration of 1.5 mol/L was prepared using cobalt sulfate, nickel sulfate and manganese sulfate, where the molar ratio of metal ions Ni:Co:Mn is 83:12:05.
(2) A 5 mol/L of alkali solution B was prepared using sodium hydroxide; a 9 mol/L of complexant solution C was prepared using ammonia and deionized water; a 0.2 mol/L of polyethylene glycol solution D was prepared using polyethylene glycol and deionized water; an additive solution E with a concentration of 0.2 mol/L was prepared using diboron trioxide.
(3) 80 L of deionized water was introduced into a 100 L of clean reaction kettle, the liquids in the reaction kettle were maintained at a temperature of 55 ° by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C, D and E were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 mL/min respectively, to control the pH in the reaction kettle to be 11.5 and the ammonia concentration to be 12 g/L; the surfactant solution D has a feed temperature of 25 °C and a feed flow rate controlled to be 5 mL/min in an early stage; the additive solution E has a feed temperature of 25 °C and a feed flow rate of 3.75 mL/min. After the particle size of the internal structure densely stacked reached 2-2.5 µm, the feed flow rate of the surfactant D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200 rpm. Under this condition, the particles grew continually until the particle size thereof was qualified, and the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a three-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

### Comparative Example 2

(1) An aqueous solution A with a total ion concentration of 1.5 mol/L was prepared using cobalt sulfate, nickel sulfate and manganese sulfate, where the molar ratio of metal ions Ni:Co:Mn is 83:12:05.
(2) A 5 mol/L of alkali solution B was prepared using sodium hydroxide; a 9 mol/L of complexant solution C was prepared using ammonia and deionized water; a 0.2 /L polyethylene glycol solution D was prepared using polyethylene glycol and deionized water.
(3) 80 L of deionized water was introduced into a 100 L of clean reaction kettle, the liquids in the reaction kettle were maintained at a temperature of 55 ° by water bath heating, and stirring was started at a speed of 450 rpm. The prepared solution C was introduced into the reaction kettle, and after ammonia concentration in the reaction kettle was measured to be 12 g/L, the alkali solution B was introduced into the reaction kettle, to adjust pH in the reaction kettle to be 12.0. During this period, high-purity nitrogen was introduced below the liquid level in the reaction kettle at a nitrogen flow rate of 0.3 m³/h.
(4) The solutions A, B, C and D were introduced into the reaction kettle through a feed pipe via a precision constant-flow pump, where the solution A has a stable flow rate of 50 mL/min and a feed temperature of 30 °C; the solutions B and C have feed temperatures of 30 °C and 25 °C respectively and have feed flow rates controlled to be 30 mL/min and 8.5 /min respectively, to control the pH in the reaction kettle to be 11.5 and the ammonia concentration to be 12 g/L; the additive solution D has a feed temperature of 25 °C and a feed flow rate controlled to be 5 mL/min in an early stage. After the particle size of the internal structure densely stacked reached 2-2.5 µm, the feed flow rate of the additive solution D was adjusted to 10 mL/min, and meanwhile, the feed flow rate of the solution C was rapidly reduced to 2.5 mL/min, to adjust the ammonia concentration in the reaction kettle to 3 g/L, and the stirring rate was quickly reduced to 200rpm. Under this condition, the particles grew continually until the particle size thereof was qualified, and then the qualified slurry was put into a qualified aging kettle; where the whole reaction process had a time controlled within 40-50 h.
(5) The slurry introduced into the aging kettle was slowly stirred for 1 h under the protection of nitrogen, and then centrifugally washed at 55°C for 30 min using 3 mol/L NaOH solution as a washing solution, and then was centrifugally washed using deionized water of 55°C for 30 min to obtain a material to be dried.
(6) The material to be dried was placed in a blast drying oven at a drying temperature of 120°C for 15 h; the dried material was sieved with a 325-mesh sieve, and iron is removed, to obtain a finished precursor.
(7) The mixture of the dried precursor and lithium hydroxide was placed in a box furnace, where a ratio of the total molar amount of metal elements to the molar amount of lithium element was 1:1.03, and the mixture was subjected to a three-stage sintering under an oxygen atmosphere, where the first stage sintering has a temperature of 440 °C and a holding time of 4 h and the second stage sintering has a temperature of 730°C and a holding time of 8 h; the heating rate of the two-stage sintering is 2 °C/min; and a corresponding positive electrode material was obtained after completing the sintering and cooling to room temperature.

**Table 1 Comparison table of electrochemical performance tests between Examples and Comparative examples under a condition of sintering only once**

| No. | Discharge specific capacity at 0.2C (mAh/g, button battery) | Initial efficiency | Retention rate after 300 cycles (%, soft-packed battery) |
|---|---|---|---|
| Example 1 | 213 | 92% | 93% |
| Example 2 | 221 | 91% | 92% |
| Example 3 | 211 | 93% | 91% |
| Example 4 | 212 | 91% | 91% |
| Comparative Example 1 | 201 | 91% | 90% |
| Comparative Example 2 | 189 | 84% | 83% |

It can be seen from the performance test results of the examples and comparative examples in Table 1 that the solutions of the examples of the present invention are superior to those of the comparative examples in terms of the discharge specific capacity, the initial efficiency and the retention rate after 300 cycles, showing significant differences. Meanwhile, it can be seen that the technical effect of the present invention cannot be achieved when changing the concentration of the raw materials or adding no boron additive.

The above description of the disclosed embodiments enables those skilled in the art to implement or use the present invention. Various amendments to these embodiments will be obvious to those skilled in the art, and the general principles defined herein may be implemented in other embodiments without departing from the spirit or scope of the present invention. Thus, the present invention will not be limited to the embodiments shown herein but is in conformity with the widest scope consistent with the principles and novel features disclosed herein.

## Claims

1. A high-nickel ternary precursor material with a molecular formula shown in formula (I):
NiₐCo_{b}Mn_{c}(OH)₂•(BO₂)_{d} (I);
wherein 0.8≤a<1, 0<b≤0.15, 0<c≤0.05, a+b+c=1, and 0<d≤0.05;
the high-nickel ternary precursor material has an inner core having a densely stacked structure and an outer shell having a dendritic radial loose structure, and both the inner core and the outer shell of the high-nickel ternary precursor are evenly doped with B element.

2. The high-nickel ternary precursor material according to claim 1, wherein the dendritic radial loose structure has a depth of 1.5-2 µm.

3. A preparation method of a high-nickel ternary precursor material, comprising following steps:
A) preparing a mixed solution of nickel, cobalt and manganese soluble salts according to a ratio, and preparing an alkali solution, a complexant solution, a surfactant solution and a boron additive solution, respectively;
B) mixing water, the alkali solution, the surfactant solution, the boron additive solution, the mixed solution of the soluble salts and the complexant solution, controlling an ammonia concentration and a feed flow rate of the surfactant solution for reaction, so that internal grains are densely stacked; and when the grains reach 2-2.5 µm, reducing the ammonia concentration and increasing the feed flow rate of the surfactant solution for continuous reaction, so that external grains show the dendritic radial loose structure;
C) aging a reactant obtained in step B) to obtain the high-nickel ternary precursor material as shown in formula (I):
NiₐCo_{b}Mn_{c}(OH)₂•(BO₂)_{d} (I);
wherein 0.8≤a<1, 0<b≤0.15, 0<c≤0.05, a+b+c =1, and 0<d≤0.05.

4. The preparation method according to claim 3, wherein the mixed solution of the soluble salts has a total concentration of metal ions of 1-2 mol/L; the alkali solution has a concentration of 2-10 mol/L; complexant is selected from one or more of ammonium bicarbonate, glycine, ammonia and triethanolamine, and the complexant solution has a concentration of 3-10 mol/L; surfactant is polyethylene glycol, and the surfactant solution has a concentration of 0.01-0.2 mol/L; boron additive is selected from one or more of diboron trioxide, boron trichloride, boron trifluoride, boric acid and sodium metaborate, and the boron additive solution has a concentration of 0.05-0.1 mol/L.

5. The preparation method according to claim 3, wherein step B) is specifically:
adding 75-85% effective volume of water into a reaction kettle, adding the alkali solution and the complexant solution under stirring to obtain an initial mixed solution, where the initial mixed solution has a pH value of 11.5-12.5 and an ammonia concentration of 10-13 g/L;
introducing a protective gas into the reaction kettle, and then introducing the mixed solution of the soluble salts, the alkali solution, the complexant solution, the surfactant solution and the boron additive solution continuously to obtain a mixed solution which is subjected to a constant-temperature reaction, where the mixed solution obtained has an ammonia concentration of 10-13 g/L, and the surfactant solution has a feed flow rate of 1-10 mL/min, so that the grains are densely stacked; when a size of the grains reaches 2-2.5 µm, the surfactant solution has a feed flow rate of 10-20 mL/min and the mixed solution has an ammonia concentration of 3-4 g/L, the constant-temperature reaction is continued so that an exterior of the grains shows the dendritic radial loose structure.

6. The preparation method according to claim 5, wherein the protective gas has a flow rate of 0.1-0.5 m³/h, and an oxygen content inside the kettle is less than 2%.

7. The preparation method according to claim 5, wherein when the grains are densely stacked, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 5-10 mL/min; the boron additive solution has a feed temperature of 20-30 °C and a feed flow rate of 3-10 mL/min; and stirring rate is 400-500 rpm.

8. The preparation method according to claim 5, wherein when the dendritic radial loose structure is formed, the mixed solution of the soluble salts has a feed temperature of 20-50 °C and a feed flow rate of 20-100 mL/min; the alkali solution has a feed temperature of 20-40 °C and a feed flow rate of 10-50 mL/min; the complexant solution has a feed temperature of 20-30 °C and a feed flow rate of 1-5mL/min; the boron additive solution has a feed temperature of 20-30 °C and a feed flow rate of 3-10 mL/min; and stirring rate is 200-300 rpm.

9. A high-nickel ternary positive electrode material with a molecular formula shown in formula (II):
LiₓNiₐCo_{b}Mn_{c}B_{d}O₂ (II);
wherein 1.02≤x≤1.03, 0.8≤a<1, 0<b≤0.15, 0<c≤0.05, a+b+c=1, and 0<d≤0.05;
all primary particles inside the high-nickel ternary positive electrode material have a slender structure and are arranged in a fully radial manner, and the particles are tightly stacked with each other.

10. The high-nickel ternary positive electrode material according to claim 9, wherein the primary particles arranged in the fully radial manner have a length of 3-4 µm and a width of 150-250 nm.

11. A preparation method of the high-nickel ternary positive electrode material according to any one of claims 9 to 10, comprising:
sintering a high-nickel ternary precursor material and a lithium source to obtain the high-nickel ternary positive electrode material;
the high-nickel ternary precursor material is the high-nickel ternary precursor material according to any one of claims 1-2 or the high-nickel ternary precursor material prepared by the preparation method according to any one of claims 3-8.

12. The preparation method according to claim 11, wherein the sintering is a two-stage sintering, including a first stage sintering at 400-600°C, and a second stage sintering at 700-800°C; and the sintering has a heating rate of 2-5°C/min.
